# EUROPEAN PATENT SPECIFICATION

(11) **EP 0 590 171 B1**
(45) Date of publication and mention of the grant of the patent: **04.12.1996**
(21) Application number: 92116499.2
(22) Date of filing: 26.09.1992
(51) Int. Cl.: F01N 3/28, B01J 35/04, B23K 1/00

(54) **Honeycomb structure for purifying exhaust gas and method of manufacturing same**
Wabenkörper zum Reinigen von Abgas, und Verfahren zu seiner Herstellung
Structure en nid d'abeilles pour la purification de gaz d'échappement et son procédé de fabrication

(43) Date of publication of application: 06.04.1994
(73) Proprietor: SHOWA AIRCRAFT INDUSTRY CO., LTD., Tokyo (JP)
(72) Inventor: Toyoda, Tetsuro, c/o Showa Aircraft Ind. Co., Tokyo (JP); Matsuoka, Katsunori, c/o Showa Aircraft Ind. Co., Tokyo (JP)
(74) Representative: Schüler, Horst, Dr.

(56) References cited:
- EP-A- 0 151 229
- WO-A-89/07488
- WO-A-90/12951
- WO-A-92/14913
- DE-U- 8 812 924
- US-A- 5 084 361
- PATENT ABSTRACTS OF JAPAN vol. 15, no. 512 (C-898) 26 December 1991 & JP-A-32 24 634 (CATALER KOGYO) 3 October 1991

## Description

### BACKGROUND OF THE INVENTION:

### FIELD OF THE INVENTION:

The present invention relates to a honeycomb structure for use in a high temperature environment and to a method of manufacturing the same, and more particularly a honeycomb structure which carries a catalyst as a support matrix for use in a catalytic converter for purifying the exhaust gas from an automobile engine and to a method of manufacturing the same.

### PRIOR ART:

The honeycomb structure of the conventional type which has been used is usually composed of a strip of corrugated plate which is made by folding the plate into continuously corrugated unevenness and of a strip of flat plate, which are alternately disposed and welded to each other by brazing into multilayers, and made overall into a prescribed configuration in a form such as a wound multilayered block. As the base metal of the above, a corrugated plate and a flat plate each having a uniform thickness have generally been used. In order to withstand use in a high temperature environment, in many cases stainless steel foil or the like have been used, and for the same purpose a brazing filler metal from, for example, the nickel group and the iron group for the brazing filler metal has been used. The honeycomb structure of this type has been used in high temperature environments, particularly in environments subject to thermal cycles of repeated heating and cooling. For example, this honeycomb structure has been used in catalytic converters for purifying the exhaust gas from automobile engines, for carrying the catalyst on its corrugated and flat plates which serve as the support matrix, and the high temperature exhaust gases from the running automobile engine including noxious emissions have been purified through reaction with the catalyst which is effected by passing through the honeycomb structure.

As examples of the conventional honeycomb structure of this type, there are U.S.P. 5,084,361, 4,282,186 and 4,400,860, and B.P. 1,452,982, applied for by the present inventor.

However, there is the following problem which has been realized about the conventional honeycomb structure of this type. When this honeycomb structure is used as the catalyst support for an exhaust gas purifying apparatus, the temperature of the exhaust gas from the running engine passing through the honeycomb structure is uniformly elevated, and the whole body of the honeycomb structure, i.e., both its outer side or casing side and its inner side or center portion, is heated by the high temperature exhaust gas. Since the outer side of the honeycomb structure is cooled by open air through the casing, its temperature rise when heated is relatively small; but the honeycomb structure is rapidly cooled to a low temperature when the engine of the vehicle is stopped, while the inner side of the honeycomb structure is not cooled by open air, and the temperature rises to a high level when heated and is maintained at that high level for a long time even when the engine of the vehicle is stopped. In the honeycomb structure which is used in a high temperature environment like this, particularly in an environment subject to thermal cycles of repeated heating and cooling, a difference between the amounts of thermal expansion and contraction takes place, as a result of which stress is generated between the outer and inner sides of the honeycomb structure due to the large temperature difference existing therein.

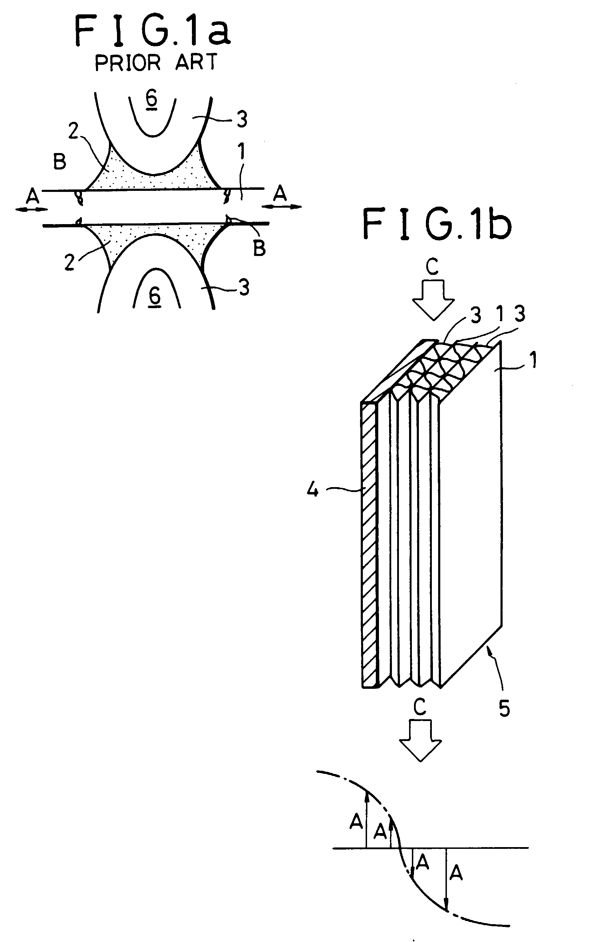

Fig. 1a is an enlarged view showing the principal part of the outer side of the honeycomb structure of the conventional type. In the figure, flat plate 1 is welded to corrugated plate 3 by means of brazing filler metal 2 applied to both sides thereof. Corrugated plate 3 can absorb stress A by deformation; however, since flat plate 1 is fixed at the weld both sides, it is hard to absorb stress A, particularly in the range of the first and second layers from the outside thereof, and cracks B and exfoliation are liable to be generated in the area of the weld due to stress A concentrated thereto, and problems have been observed from the viewpoint of heat proofness, durability and reliability of the honeycomb structure. Hitherto, countermeasures have been taken to prevent concentration of stress A by limiting the location of welding flat plate 1 and corrugated plate 3 to only a part of the total contact line or by providing thicker flat plate 1; however, no fundamental solution has been obtained, and stress A is still concentrated in the area of the weld of flat plate 1, and cracks B and exfoliation are also still liable to be generated.

Fig. 1b is a perspective diagram showing the direction of stress A in the area of the outer side of the conventional type of honeycomb structure. When the honeycomb structure is used as the catalyst support for an exhaust gas purifying apparatus, a large temperature difference is generated as described above between the outer side of the honeycomb structure on the side of casing 4 and the inner side thereof on the side of the center; further, since casing 4 is thicker and of a different material than flat plate 1 and corrugated plate 3, thermal expansion and contraction due to heating and cooling thereof commonly take place but with different amounts on one side, i.e., in casing 4, the outer side of the honeycomb structure, and on the other side, i.e., on the inner side thereof, resulting in stress A working in the reverse direction on each side. For example, when the honeycomb structure is heated, the direction of thermal expansion, i.e., elongation, which occurs is the same as the passing direction of exhaust gas C, however, the amount is small with the outer side former but large with the inside. As shown in Fig. 1b, demarcating the range at the first or second layer from the casing 4 and at the inner side of the honeycomb structure, i.e., in the former, stress A works in the reverse direction of passing exhaust gas C, while in the latter, stress A works in the direction of exhaust gas C. Therefore, on the outer side of the honeycomb structure, in particular in the range of the first and second layers from the outside, stress A concentrates in the area of the weld of flat plate 1 and corrugated plate 3, whereby the core is sometimes caused to slip out, and problems of the honeycomb structure are observed from the viewpoint of heat proofness, durability and reliability.

### SUMMARY OF THE INVENTION:

In view of these circumstances, the present invention has been presented to overcome the inconvenience observed in the honeycomb structures of conventional type as described in DE-U-88 12 924.

This known honeycomb structure having a wound configuration comprising a pair of flat metallic plates which are continuously in overlapping relation to each other.

According to the invention the honeycomb structure is characterized in that the overlapping portionsof the flat metallic plates are not welded together in the range of at least more than one layer from the outside, a metallic corrugated plate disposed on said flat metallic plates and welded to at least one plate of said pair of flat metallic plates.

The new honeycomb structure with the pair of metallic plates avoids the concentration of stress by absorbing it between two sheets of flat plates which are provided in at least not less than two layers from the outside so that they overlap but are not welded to each other.

The honeycomb structure of the present invention is made in a honeycomb configuration in which a strip of metallic corrugated plate which is made by folding the metallic plate into continuously corrugated unevenness and a strip of flat metallic plate are alternately disposed in multilayers of a honeycomb structure. In the range of at least more than one layer from the outside, another flat sheet is provided along said flat plate overlapped without being welded to each other.

The method of winding the honeycomb structure having wound configuration is characterized by the following:

Providing a strip of metallic corrugated plate providing a first continuous and second continuous flat metallic plate in partially overlapping relation to each other;
and welding said strip of metallic corrugated plate to at least one of said first and second metallic plates while leaving said first and second flat metallic plates unwelded with respect to each other in the range of at least more than one layer from outside.

Additional preferred embodiments of the inventive method result from the enclosed claim 3.

When this honeycomb structure is used in a high temperature environment, particularly in an environment in which thermal cycles of heating and cooling are repeated, the outer side of the honeycomb structure is always cooled by open air, so that temperature rise of the outer side when heated is relatively small but is rapidly cooled at the time of cooling, while the inner side of the honeycomb structure is not cooled by open air so that its temperature is raised high when heated and further the high temperature is maintained for a long time even when it is cooled.

Due to this temperature difference, a difference between the amount of thermal expansion and contraction is generated, resulting in stress in mutually reversely directed. In this honeycomb structure, since flat plates are overlapped to each other in use and not welded to each other in the range of at least not less than two layers from the outside, the above stress is absorbed between the two sheets of flat plates and stress concentration on the plate, in the area of weld with the corrugated plate is avoidable; consequently, cracks and exfoliation of the plate are prevented, and the core of the honeycomb structure is protected from slipping out.

Further, excellent heat resistance durability and reliability are obtained.

### BRIEF DESCRIPTION OF THE DRAWINGS:

The present invention will be described below with reference to the embodiment shown in the drawings. Fig. 1a is an enlarged view showing the principal part of the outer side of the honeycomb structure of the conventional type. Fig. 1b is a perspective diagram showing the direction of stress generated in the part shown in Fig. 1a. Fig. 2 is a perspective view of a wound-shaped honeycomb structure of an embodiment of the present invention. Fig. 3a is a perspective view of the embodiment of the wound-shaped honeycomb structure in the preforming stage, while Fig. 3b a perspective view thereof in its being formed: Fig. 4a is a perspective view of another embodiment of the wound-shaped honeycomb structure in the preforming stage, while Fig. 4b a perspective view in its being formed. Fig. 5 is an enlarged view showing the principal part of the outer side of the honeycomb structure according to the present invention. Fig. 6a is a perspective view of the corrugated plate, while Fig. 6b a perspective view of the flat plate. Fig. 7 is a sectional view of an embodiment showing the relative position of flat sheet and brazing filler metals.

### DETAILED DESCRIPTION OF THE EMBODIMENT:

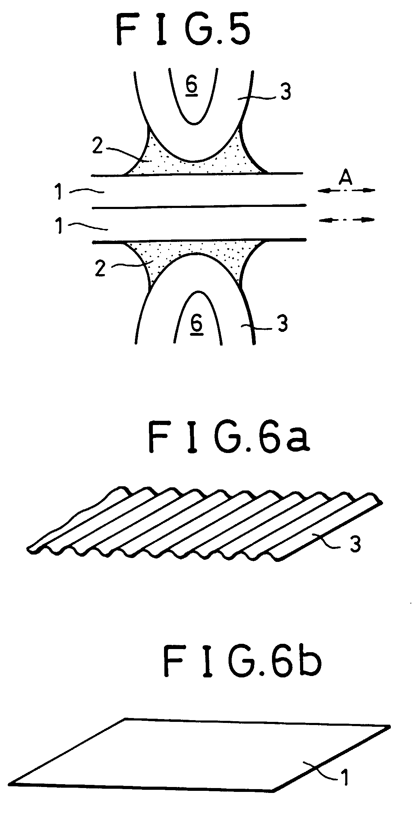

According to this manufacturing method, a strip of metallic corrugated plate 3 which is made by folding the flat metallic plate into continuously corrugated unevenness which is shown in the perspective view of Fig. 6a and a strip of metallic flat plate 1, are first prepared. Corrugated plate 3 is formed by corrugating or pressing a strip of metal foil of stainless steel or the like into a plurality of linear corrugated unevennesses, i.e., into crests and troughs folded parallelly and continuously with a fixed pitch and height. For the flat plate, a strip of metallic foil such as stainless steel foil is used. Thereafter, corrugated plate 3 and flat plate 1 thus prepared are disposed alternately into multilayers, further another flat plate is inserted along the flat plate 1 so that they overlaps each other in the range of at least not less than two layers from the outside thereof. By welding corrugated plate 3 and flat plate 1 and without welding two overlapped sheets of flat plate 1, honeycomb structure 5 is formed overall into the prescribed configuration.

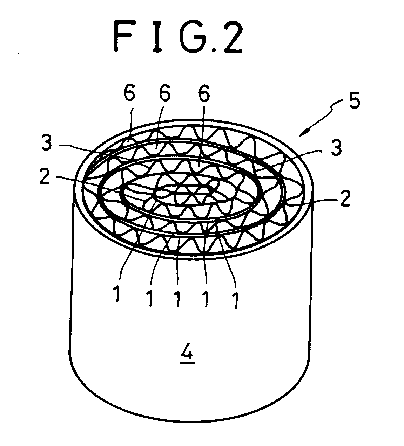

These steps are described in detail in the following. In honeycomb structure 5 in Fig. 2, each sheet of corrugated plate 3 and flat plate 1 of the same width are wound from the fixed center and overlapped into multilayers so as to be disposed alternately, and at the whole or a part of the contact line between corrugated plate 3 and flat plate 1, brazing filler metal 2 of the nickel or iron group is applied. Also in the illustrated example, flat plates 1 in the range of the first and second layers from the outside, are disposed so that they overlap each other and brazing filler metal 2 is not provided between these two sheets of flat plate 1. Then by heating corrugated plate 3 and flat plate 1 thus disposed to melt brazing filler metal 2 and by causing filler metal 2 to set, corrugated plate 3 and flat plate 1 are welded therebetween, thereby forming wound-shaped honeycomb structure 5 which has a circular or ellipsoidal total section.

Further one of said two flat sheets, which is inserted into the multilayers of matrix without being welded to the other flat sheet can be made of electrically insulating material. The use of electrically insulating material makes better electric current through the matrix when the matrix is heated electrically in order to obtain quicker reaction.

Further in the illustrated example, two sheets of flat plate 1 are overlapped in the first and second layers, from top to bottom and vice versa, but brazing filler metal 2 is not applied between these two sheets of flat plate 1. Next, by heating and pressing thus arranged corrugated plate 3 and flat plate 1 from both top and bottom thereof and causing applied brazing filler metal 2 to melt and set, corrugated plate 3 and flat plate 1 are welded therebetween, whereby honeycomb structure 5 is made into the overall form of a multilayered matrix block.

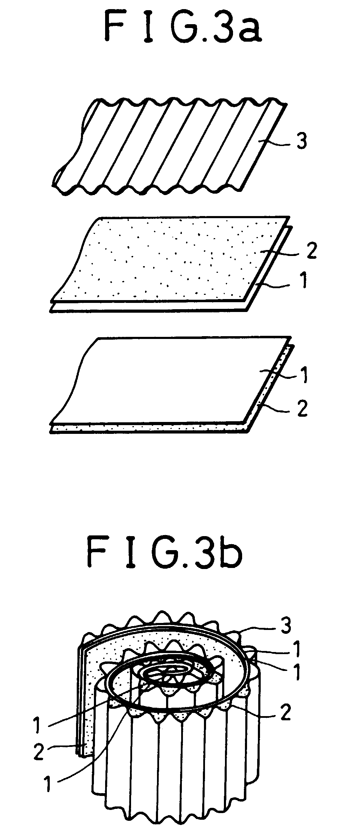

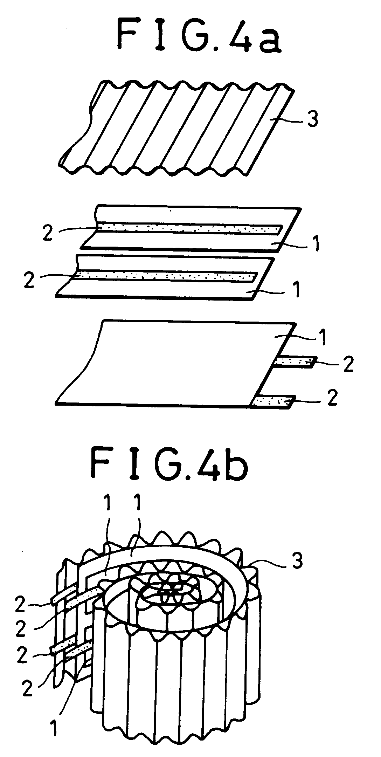

Fig. 3a is a perspective view of an example of a wound-shaped honeycomb structure 5 showing the preformed stage, while Fig. 3b a perspective view while it is being formed. In honeycomb structure 5 in Fig. 3a, all abutting portions of corrugated plate 3 and flat plate 1 are provided with strips of brazing filler metal 2 having substantially the same width as that of both plates and welded together therewith, where flat plate 1 is overlaps in all layers, different from the example in Fig. 2. Further, Fig. 4a is a perspective view of another example of a wound-shaped honeycomb structure 5 showing the pre formed stage, while 4b is a perspective view while it is being formed. In honeycomb structure 5 in Fig. 4a, corrugated plate 3 and flat plate 1 are provided at only a part of the abutting portion thereof with two spaced pieces of brazing filler metal 2 and welded together therewith, in which one of two overlapped sheets of flat plate 1 is in the form of a strip narrower than its partner, which is different from the examples shown in Figs. 2 and 3a. In other words, when brazing filler metal 2 is partially applied as described above, it is permissible to overlap the two sheets of flat plates 1 only for the range which can cover brazing filler metal 2. Further, every example described above has flat plate 1 disposed on the outermost surface such as the first layer from the outside; however, this is not restrictive and corrugated plate 3 may be disposed on the outermost surface. Fig. 1b is a view showing a catalytic converter which purifies exhaust gas C from an automobile engine, where 4 denotes a casing of cylindrical or square tubular form which acts as the outer casing for housing honeycomb structure 5, and both the casing and the honeycomb structure are welded by brazing filler metal 2.

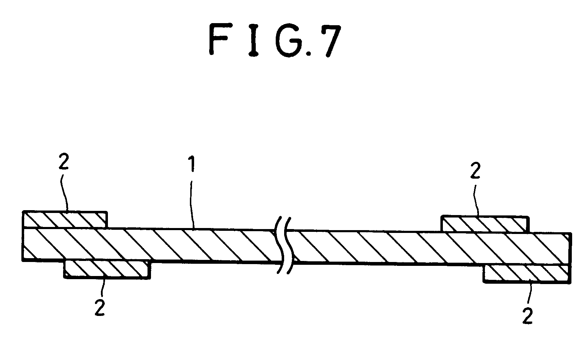

Fig. 7 is a sectional view of an embodiment showing the relative position of brazing filler metals 2 to a flat sheet 1, where brazing filler metals having the same wide width are used. The outer end of the brazing filler metal 2 at the upper left side is aligned with the left end of the flat sheet 1, while the outer end of the brazing filler metal 2 at the lower left side is deviately placed inward from the left end of the flat sheet 1. The outer end of the brazing metal 2 at the lower right side is aligned with the right end of the flat sheet, while the outer end of the brazing filler metal 2 at the upper right side is deviately placed inward from the right end of the flat sheet 1. According to the deviation of the position of brazing filler metals sandwiching the flat sheet inbetween, stress concentration in the flat sheet is reduced and strain or cracks hardly occur and durability is improved.

According to the above described manufacturing method, the honeycomb structure 5 is manufactured. In other words, the strip of metallic corrugated plate 3 which is made by folding the metallic plate into continuously corrugated unevenness and the strip of flat metallic plate 1 are alternately disposed and welded into multilayers, whereby honeycomb structure 5 is made into the prescribed, overall configuration in the form of a wound or a multilayered block. In the range of at least more than one layer from the outside, two sheets of flat plate 1 are used in a pair so that they only overlap without being welded to each other. Fig. 5 is an enlarged view showing the principal part of the outer side of honeycomb structure 5 of this type. Corrugated plate 3 and flat plate 1 form a cell wall which comprises a plurality of cells 6 all substantially in the form of triangles, quadrangles, trapezoids, half hexagons or a plurality of hollow pillars of various types. It is known that honeycomb structure 5 has characteristics such as excellent strength-to-weight, light weight, high rigidity and strength, excellent formation for fluid flow, easy formability and economical production cost. Further, it has a large surface area per unit volume, that is, the surface area of the cell wall, i.e., corrugated plate 3 and flat plate 1, is large, so that it can be used in a catalytic converter for purifying exhaust gas from an automobile engine. As the support matrix, corrugated plate 3 and flat plate 1 are provided with the catalyst on the surfaces thereof, and high temperature exhaust gas from the engine of the running automobile including noxious emissions can be purified by passing through a plurality of cells 6 thereby reacting with the attached catalyst.

Through the above process, both the outer and inner sides of honeycomb structure 5 are heated due to the exhaust gas of uniform high temperature passing therethrough and due to thermal reaction of the catalyst reacting with the gas. Since the outer side of honeycomb structure 5 is always cooled by open air through casing 4, its temperature rise when heated is relatively small and is rapidly cooled in the cooling process when the automobile engine is stopped, while the inner side of honeycomb structure 5 is spaced from open air so that it is not cooled by open air and its high temperature is maintained for a long time even in the cooling cycle after the automobile engine is stopped. Thus in honeycomb structure 5 which is used in an environment wherein heating and cooling cycles are repeated, a difference in the amount of thermal expansion and contraction occur. As a result, stress A is generated between the outer and inner sides thereof due to the large temperature difference. As described above with reference to Fig. 1b, stress A acts in two parts of honeycomb structure 5 in mutually reverse directions which demarcate the range by the first or second layer from the outside thereof.

Since two overlapped sheets of flat plate 1 are used without being welded to each other in at least not less than two layers from the outside of honeycomb structure 5, stress A is absorbed between the two sheets of flat plate 1 which are slightly, mutually and slidably deformable, and concentration of stress A in flat plate 1 in the area of the weld with corrugated plate 3 is avoided in the range of the first and second layers from the outside thereof. In other words, in honeycomb structure 5, concentration of stress A is avoided, with the result that cracks and exfoliation of flat plate 1 in the location close to the above is prevented and the core is also protected from slipping out.

## Claims

1. A honeycomb structure (5) having a wound configuration comprising a pair of flat metallic plates (1) which are continuously in overlapping relation to each other,
characterized in that the overlapping portions of the flat metallic plates (1) are not welded together in the range of at least more than one layer from the outside,
a metallic corrugated plate (3) disposed on said flat metallic plates (1) and welded to at least one plate of said pair of flat metallic plates (1).

2. A method of winding to get a honeycomb structure (5) having a wound configuration according to claim 1, characterized by the following:
providing a strip of metallic corrugated plate (3);
providing a first continuous and second continuous flat metallic plate (1), in partially overlapping relation to each other;
and welding said strip of metallic corrugated plate (3) to at least one of said first and second metallic plates (1), while leaving said first and second flat metallic plates (1) unwelded with respect to each other in the range of at least more than one layer from outside.

3. A method of winding to get a honeycomb structure (5) having a wound configuration according to claim 1 comprising the following steps:
providing first continuous and second continuous separate metallic flat plates (1), and also providing a corrugated metallic plate, the method also including providing strips of brazing material (2);
disposing the separate first and second flat plates (1) in partial overlapping relation, and disposing the brazing strips (2) on one side of each of said first and second metallic flat plates (1) in said overlapping region while not providing strips of brazing material (2) between the flat plates (1) in the overlapping region;
disposing a corrugated metallic plate (3) adjacent said brazing strips (2); and
welding said corrugated metallic plate (3) to said at least one of said first and second metallic flat plates (1) with said brazing strips (2).

## Patentansprüche

1. Wabenkörper (5) mit einem gewickelten Aufbau, der ein Paar flache metallische Platten (1), die kontinuierlich in überlappender Relation zueinander liegen, umfaßt,
dadurch gekennzeichnet, daß die überlappenden Abschnitte der flachen metallischen Platten (1) in dem Bereich von wenigstens mehr als einer Lage von der Außenseite nicht aneinandergeschweißt sind,
und daß eine metallische gewellte Platte (3) auf den flachen metallischen Platten (1) angeordnet und an wenigstens eine Platte des Paares flacher metallischer Platten (1) angeschweißt ist.

2. Ein Verfahren zum Wickeln zur Herstellung eines Wabenkörpers (5) mit einem gewickelten Aufbau nach Anspruch 1, gekennzeichnet durch das Folgende:
Bereitstellen eines Streifens aus einer metallischen gewellten Platte (3);
Bereitstellen einer ersten kontinuierlichen und einer zweiten kontinuierlichen flachen metallischen Platte (1) in solch einer Beziehung zueinander, daß sie sich teilweise überlappen;
und Anschweißen des Streifens aus einer metallischen gewellten Platte (3) an wenigstens eine der ersten bzw. der zweiten metallischen Platten (1), während die erste und die zweite flache metallische Platte (1) in bezug auf einander im Bereich von wenigstens mehr als einer Lage von der Außenseite her unverschweißt bleiben.

3. Ein Verfahren zum Wickeln zum Herstellen eines Wabenkörpers (5) mit einem gewickelten Aufbau nach Anspruch 1, das die folgenden Schritte umfaßt:
Bereitstellen einer ersten kontinuierlichen und einer davon getrennten zweiten kontinuierlichen metallischen flachen Platte (1) und zusätzliches Bereitstellen einer gewellten metallischen Platte, wobei das Verfahren auch das Bereitstellen von Streifen aus Hartlötmaterial (2) einschließt;
Anordnen der getrennten ersten und zweiten flachen Platte (1) in teilweiser Uberlappung zueinander und Anordnen der Hartlötstreifen (2) auf einer Seite jeweils von der ersten und der zweiten metallischen flachen Platte (1) in dem Uberlappungsbereich, wobei keine Streifen aus Hartlötmaterial (2) zwischen den flachen Platten (1) in dem Uberlappungsbereich vorgesehen werden;
Anordnen einer gewellten metallischen Platte (3) angrenzend an die Hartlötstreifen (2); und
Anschweißen der gewellten metallischen Platte (3) an die wenigstens eine der ersten und der zweiten metallischen flachen Platten (1) mit den Hartlötstreifen (2).

## Revendications

1. Structure en nid d'abeilles (5) présentant une configuration enroulée comprenant une paire de tôles métalliques planes (1) qui se chevauchent de façon continue l'une l'autre , caractérisée en ce que les parties de chevauchement des tôles planes métalliques (1) ne sont pas soudées ensemble sur une étendue qui est au moins supérieure à une couche à partir de l'extérieur ,
une tôle ondulée métallique (3) disposée sur lesdites tôles métalliques planes (1) et soudée à au moins une tôle de ladite paire de tôles métalliques planes (1).

2. Procédé d'enroulement pour obtenir une structure en nid d'abeilles (5) présentant une configuration enroulée selon la revendication 1, caractérisé par ce qui suit :
fournir une bande de tôle ondulée métallique (3);
fournir une première tôle métallique plane continue et une seconde tôle métallique plane continue (1), se chevauchant partiellement l'une l'autre ;
et souder ladite bande de tôle ondulée métallique (3) à au moins l'une desdites première et seconde tôles métalliques (1) , tout en laissant lesdites première et seconde tôles métalliques planes (1) sans être soudées l'une à l'autre sur une étendue qui est au moins supérieure à une couche à partir de l'extérieur.

3. Procédé d'enroulement pour obtenir une structure en nid d'abeilles (5) présentant une configuration enroulée selon la revendication 1 comprenant les étapes suivantes :
fournir des première et seconde tôles planes métalliques séparées et continues (1) , et fournir également une tôle ondulée métallique , le procédé incluant également de fournir des bandes de matériau de brasage (2) ;
disposer les première et seconde tôles planes séparées (1) en relation de chevauchement partiel, et disposer les bandes de brasage (2) sur un côté de chacune desdites première et seconde tôles planes métalliques (1) dans ladite zone de chevauchement tout en ne fournissant pas de bande de matériau de brasage (2) entre les tôles planes (1) dans la zone de chevauchement;
disposer une tôle ondulée métallique (3) adjacentes auxdites bandes de brasage (2) ; et
souder ladite tôle ondulée métallique (3) à l'une au moins desdites première et seconde tôles planes métalliques (1) avec lesdites bandes de brasage (2).
